# EUROPEAN PATENT APPLICATION

(11) **EP 4 456 495 A1**
(43) Date of publication of application: **30.10.2024**
(21) Application number: 23777701.6
(22) Date of filing: 21.02.2023
(51) Int. Cl.: H04L 41/082, G06F 8/65

(54) **FUNCTION UPDATING METHOD AND RELATED APPARATUS**

(30) Priority: 28.03.2022 CN 202210312427
(71) Applicant: Hangzhou Tuya Information Technology Co., Ltd., Hangzhou, Zhejiang 310030 (CN)
(72) Inventor: ZHAO, Xiaowei, Hangzhou, Zhejiang 310030 (CN)
(74) Representative: Kurig, Thomas
(86) International application number: PCT/CN2023/077369
(87) International publication number: WO 2023/185322

(57) **Abstract**

Embodiments of the present application disclose a feature updating method, comprising: a server sending upgrade information to an IoT device according to preset conditions, and then receiving an update request of the IoT device; the server sending device capability description scheme information according to the update request, and then receiving update information sent by the IoT device; the server establishing an association relationship between the IoT device and a first product version according to the update information; and the server sending upgrade success information to a terminal, and then sending first device model information and first product model information to the terminal, in order for the terminal to establish an association relationship with the first product version.

## Description

### Technical Field

Embodiments of the present application relate to the field of Internet of Things (IoT), in particular to a feature updating method and related apparatus.

### Background

IoT, that is, the Internet where everything is connected, connects any item to the Internet through information sensing devices such as RFID (Radio Frequency Identification), infrared sensors, GPS (Global Positioning System), and laser scanners, according to agreed-upon protocols, enabling information exchange and communication. This allows for intelligent identification, localization, tracking, monitoring, and management of objects, and enables interconnectedness between people and machines at any time and any place.

The features of IoT products encompass the inherent features of hardware devices, the configuration of product features by platforms, and the visual control of hardware products by terminal applications. People can satisfy their production and lifestyle needs through the features provided by IoT products. As people's demands continue to rise, the features of IoT products are not fixed.

Currently, IoT devices only support firmware upgrades and cannot upgrade product features. For features already supported by the device hardware design, it is not possible to configure and upgrade product features on the platform side, and the terminal applications cannot enable new features. The existing technology cannot add, modify, or delete features for IoT products, thus making it impossible to update existing IoT products, causing certain inconveniences for users.

### Summary

Embodiments of the present application provide a feature updating method and related apparatus.

A feature updating method comprises:
a server sending upgrade information to an IoT device;
the server receiving an update request of the IoT device, the update request being information obtained by the IoT device according to the upgrade information;
the server sending device capability description scheme information to the IoT device according to the update request, in order for the IoT device to update service capabilities;
the server receiving update information sent by the IoT device, the update information being information obtained by the IoT device from updating the service capabilities;
the server establishing an association relationship between the IoT device and a first product version according to the update information, the first product version being a target version of an IoT product corresponding to the IoT device;
the server sending upgrade success information to a terminal, in order for the terminal to send a first acquisition request to the server, the first acquisition request being information obtained by the terminal according to the upgrade success information; and
the server sending first device model information and first product model information to the terminal according to the first acquisition request, in order for the terminal to establish an association relationship with the first product version, the first device model information comprising basic information of the IoT device and business data of the IoT device, and the first product model information comprising basic information of the IoT product and the service capabilities of the IoT device.

Alternatively, before the server sending the update information to the IoT device according to preset conditions, the feature updating method further comprises:
the server receiving a network configuration request sent by the terminal;
the server sending a network configuration token to the terminal according to the network configuration request, in order for the terminal to send the network configuration token to the IoT device;
the server receiving an activation request sent by the IoT device, the activation request being information obtained by the IoT device according to the network configuration token, and the activation request comprising a product identifier of the IoT device and a software version of the IoT device;
the server obtaining a firmware identifier corresponding to the product identifier through querying based on the product identifier;
the server obtaining a second product version according to the software version and the firmware identifier;
the server establishing an association relationship between the IoT device and the second product version;
the server sending activation information to the terminal, in order for the terminal to send a second acquisition request to the server, the activation information being obtained by the server according to the activation request; and
the server sending second device model information and second product model information to the terminal according to the second acquisition request, in order for the terminal to establish an association relationship with the second product version.

Alternatively, before the server sending the update information to the IoT device, the feature updating method further comprises:
the server determining whether the IoT product needs upgrade; and
if so, the server sending the upgrade information to the IoT device.

Alternatively, the server determining whether the IoT product needs upgrade comprises:
the server acquiring detection information sent by the IoT device, the detection information comprising a product identifier of the IoT product; and
the server determining whether there is a need for upgrade according to the detection information sent by the IoT device.

Alternatively, the server determining whether the IoT product needs upgrade comprises:
the server acquiring a firmware version of the IoT device and a software version of the terminal under the first product version; and
the server determining whether there is a need for upgrade according to a matching status of the firmware version of the IoT device and the software version.

A feature updating method comprises:
a terminal receiving upgrade success information sent by a server;
the terminal sending a first acquisition request to the server according to the upgrade success information;
the terminal receiving first device model information and first product model information sent by the server, the first device model information and the first product model information being information obtained by the server according to the first acquisition request; and
the terminal establishing an association relationship with a first product version according to the first device model information and the first product model information.

Alternatively, before the terminal receiving the upgrade success information sent by the server, the feature updating method further comprises:
the terminal sending a network configuration request to the server;
the terminal receiving a network configuration token sent by the server, the network configuration token being information obtained by the server according to the network configuration request;
the terminal receiving activation information sent by the server, the activation information being obtained by the server according to the activation request;
the terminal sending a second acquisition request to the server according to the activation information;
the terminal receiving second device model information and second product model information sent by the server, the second device model information and the second product model information being information obtained by the server according to the second acquisition request; and
the terminal establishing an association relationship with a second product version according to the second device model information and the second product model information.

A server comprises:
a first sending unit configured to send upgrade information to an IoT device;
a first receiving unit configured to receive an update request of the IoT device, the update request being information obtained by the IoT device according to the upgrade information;
the first sending unit being further configured to send device capability description scheme information to the IoT device, in order for the IoT device to update service capabilities;
the first receiving unit being further configured to receive update information sent by the IoT device, the update information being information obtained by the IoT device from updating the service capabilities;
a first association unit configured to establish an association relationship between the IoT device and a first product version according to the update information, the first product version being a target version of an IoT product corresponding to the IoT device;
the first sending unit being further configured to send upgrade success information to a terminal, in order for the terminal to send a first acquisition request to the server, the first acquisition request being information obtained by the terminal according to the upgrade success information; and
the first sending unit being further configured to send first device model information and first product model information to the terminal according to the first acquisition request, in order for the terminal to establish an association relationship with the first product version, the first device model information comprising basic information of the IoT device and business data of the IoT device, and the first product model information comprising basic information of the IoT product and the service capabilities of the IoT product.

A terminal comprises:
a second receiving unit configured to receive upgrade success information sent by a server;
a second sending unit configured to send a first acquisition request to the server according to the upgrade success information;
the second receiving unit being further configured to receive first device model information and first product model information sent by the server, the first device model information and the first product model information being information obtained by the server according to the first acquisition request; and
a second association unit configured to establish an association relationship with a first product version according to the first device model information and the first product model information.

A computer-readable storage medium comprises instructions which, when running on a computer, cause the computer to implement the aforementioned method.

As can be seen from the above technical scheme, the embodiments of the present application have the following advantages.

The server sends the upgrade information to the IoT device, then receives the update request of the IoT device, and then sends the device capability description scheme information to the IoT device according to the update request. The server receives the update information sent by the IoT device, and then establishes an association relationship between the IoT device and the first product version according to the update information. The server sends the upgrade success information to the terminal, and then sends the first device model information and the first product model information to the terminal according to the first acquisition request, so that the terminal can establish an association relationship with the first product version. In this way, after configuring the required feature descriptions and device control panel on the platform side, the product undergoes upgrade by implementing the feature updating scheme proposed by the present application. This ensures that the IoT devices under the same IoT product are updated, and the terminal is also updated, thereby achieving an overall feature update of the IoT product. This allows users to immediately experience the updated features through the terminal application, providing a better user experience. Moreover, because the feature updating scheme of the present application makes the product upgrading process very convenient, the platform side can add, modify and delete the features of the products that have been mass-produced and released, and differential distribution control of features can be achieved by configuring different product versions. Furthermore, by implementing the feature updating scheme provided by the present application, different hardware devices within the same product can access different features based on their specific usage environments (such as APP versions or firmware versions).

### Brief Description of the Drawings

Fig. 1 is a schematic diagram of a feature updating method according to an embodiment of the present application;
Fig. 2 is a schematic diagram of a feature updating method according to another embodiment of the present application;
Fig. 3 is a schematic diagram of a feature updating method according to yet another embodiment of the present application;
Fig. 4 is a schematic diagram of a server according to an embodiment of the present application;
Fig. 5 is a schematic diagram of a server according to another embodiment of the present application; and
Fig. 6 is a schematic diagram of a terminal according to an embodiment of the present application.

### Detailed Description of Embodiments

Embodiments of the present application provide a feature updating method and related apparatus.

IoT is an information carrier based on the Internet, traditional telecommunications networks, and other platforms. It establishes a network in which all independently addressable physical objects can communicate with each other. While IoT products offer users various services, they also face the problem of the inability to iterate and update their original IoT products. The feature updating method provided by the embodiments of the present application can address these problems, bringing an enhanced user experience.

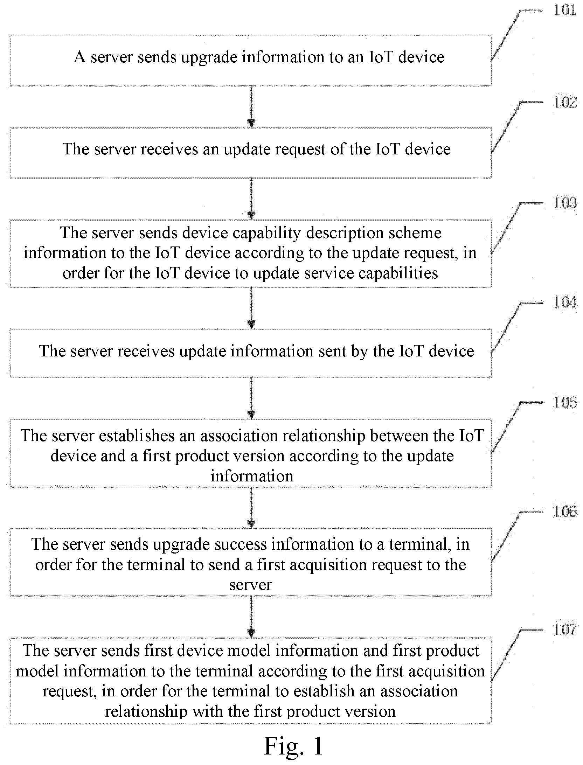

Next, the feature updating method provided by the embodiments of the present application will be described from the server side. Referring to Fig. 1, the feature updating method according to an embodiment of the present application comprises the following steps.

In 101, a server sends upgrade information to an IoT device.

A server sends upgrade information to an IoT device. The server, also known as the cloud, can be pre-configured and send the upgrade information to the IoT device after meeting the conditions. Here, the IoT device may be a device with communication modules, such as smart lights, smart TVs and smart fans.

In 102, the server receives an update request of the IoT device.

After the IoT device obtains the update request according to the upgrade information, the server receives the update request sent by the IoT device. The update request is used to request the relevant information needed for updating, in order for the IoT device to update service capabilities accordingly.

In 103, the server sends device capability description scheme information to the IoT device according to the update request, in order for the IoT device to update service capabilities.

The server sends the device capability description scheme information to the IoT device according to the update request, in order for the IoT device to update the service capabilities. The server obtains the device capability description scheme information according to the update request, and then sends the device capability description scheme information to the IoT device, in order for the IoT device to update the service capabilities according to the device capability description scheme information. Here, the device capability description scheme information refers to schema information, which can be simply understood as a rule to present device features in data.

In 104, the server receives update information sent by the IoT device.

After the IoT device updates the service capabilities to obtain the update information, the server receives the update information sent by the IoT device. The reception of the update information indicates that the IoT device has completed the update of the service capabilities, so that the following steps can be performed.

In 105, the server establishes an association relationship between the IoT device and a first product version according to the update information.

The server establishes an association relationship between the IoT device and the first product version according to the update information. Here, the first product version is a target version of an IoT product corresponding to the IoT device, and the target version is the latest version in the update scenario. Specifically, the data of the IoT device are initialized according to the latest device capability description scheme information, and an association relationship is established between the IoT device and the first product version.

In 106, the server sends upgrade success information to a terminal, in order for the terminal to send a first acquisition request to the server.

The server sends the upgrade success information to the terminal, in order for the terminal to send the first acquisition request to the server. Here, the first acquisition request is information obtained by the terminal according to the upgrade success information. The application software of the terminal needs to send the first acquisition request to the server in order to obtain the data needed for software updates.

In 107, the server sends first device model information and first product model information to the terminal according to the first acquisition request, in order for the terminal to establish an association relationship with the first product version.

The server sends the first device model information and the first product model information to the terminal according to the first acquisition request, in order for the terminal to establish an association relationship with the first product version. Specifically, the server sends the first device model information to the terminal according to the first acquisition request, the application software of the terminal sends a request to the server after receiving the first device model information, and then the server sends the first product model information to the terminal.

The first device model information comprises basic information of the IoT device and business data of the IoT device, the basic information of the IoT device includes IoT device identifier, IoT device name, IoT device icon and online status, and the business data of the IoT device include feature name, latest status of feature and update time of feature status. The first product model information comprises basic information of the IoT product and the service capabilities of the IoT device. The basic information of the IoT product includes manufacturer identifier, manufacturer name, device type and protocol type. The service capabilities of the IoT device are used to describe the functionality of the IoT device. Here, the functionality is made up of several service capabilities, and each service capability has its corresponding attributes, commands, and command parameters.

An association relationship is established between the terminal and the first product version, with configuration focusing on device capability description scheme, panel, multilanguage, and shortcut control. Here, the data among different product versions can be isolated in four aspects: schema configuration, panel configuration, multilanguage configuration and shortcut control configuration.

In the embodiments of the present application, the server sends the upgrade information to the IoT device, then receives the update request of the IoT device, and then sends the device capability description scheme information to the IoT device according to the update request. The server receives the update information sent by the IoT device, and then establishes an association relationship between the IoT device and the first product version according to the update information. The server sends the upgrade success information to the terminal, and then sends the first device model information and the first product model information to the terminal according to the first acquisition request, so that the terminal can establish an association relationship with the first product version. In this way, after configuring the required feature descriptions and device control panel on the platform side, the product undergoes upgrade by implementing the feature updating scheme proposed by the present application. This ensures that the IoT devices under the same IoT product are updated, and the terminal is also updated, thereby achieving an overall feature update of the IoT product. This allows users to immediately experience the updated features through the terminal application, providing a better user experience. Moreover, because the feature updating scheme of the present application makes the product upgrading process very convenient, the platform side can add, modify and delete the features of the products that have been mass-produced and released, and differential distribution control of features can be achieved by configuring different product versions. Furthermore, by implementing the feature updating scheme provided by the present application, different hardware devices within the same product can access different features based on their specific usage environments (such as APP versions or firmware versions).

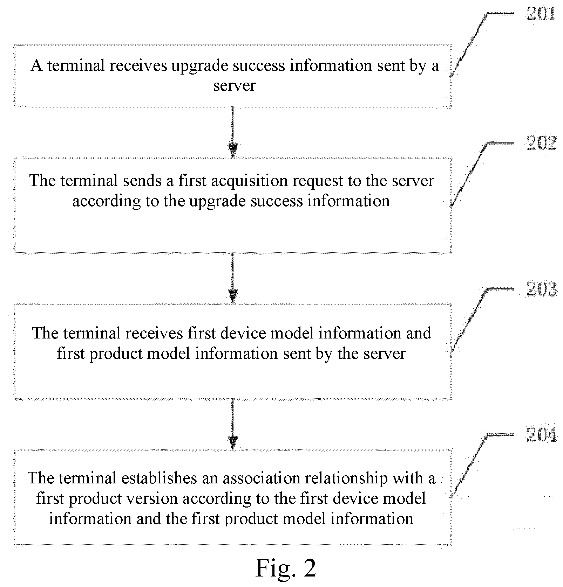

Next, the feature updating method provided by the embodiments of the present application will be described from the terminal side. Referring to Fig. 2, the feature updating method according to another embodiment of the present application comprises the following steps.

In 201, a terminal receives upgrade success information sent by a server.

The terminal receives the upgrade success information sent by the server. The upgrade success information indicates that an IoT device has been updated, and the terminal can carry out subsequent operations.

In 202, the terminal sends a first acquisition request to the server according to the upgrade success information.

The terminal sends the first acquisition request to the server according to the upgrade success information. The application software of the terminal needs to send the first acquisition request to the server in order to obtain the data needed for software updates.

In 203, the terminal receives first device model information and first product model information sent by the server.

The terminal receives the first device model information and the first product model information sent by the server. Specifically, the terminal first receives the first device model information, then sends a request, and then receives the first product model information sent by the server. The first device model information comprises basic information of the IoT device and business data of the IoT device, the basic information of the IoT device includes IoT device identifier, IoT device name, IoT device icon and online status, and the business data of the IoT device include feature name, latest status of feature and update time of feature status. The first product model information comprises basic information of the IoT product and the service capabilities of the IoT device. The basic information of the IoT product includes manufacturer identifier, manufacturer name, device type and protocol type. The service capabilities of the IoT device are used to describe the functionality of the IoT device. Here, the functionality is made up of several service capabilities, and each service capability has its corresponding attributes, commands, and command parameters.

In 204, the terminal establishes an association relationship with a first product version according to the first device model information and the first product model information.

The terminal establishes an association relationship with the first product version according to the first device model information and the first product model information. Here, the first product version is a target version of an IoT product corresponding to the IoT device, and the target version is the latest version in the update scenario. An association relationship is established between the terminal and the first product version, with configuration focusing on device capability description scheme, panel, multilanguage, and shortcut control. Here, the data among different product versions can be isolated in four aspects: schema configuration, panel configuration, multilanguage configuration and shortcut control configuration.

In the embodiments of the present application, after receiving the upgrade success information, the terminal sends the first acquisition request to the server, then receives the first device model information and the first product model information, and finally establishes an association relationship with the first product version. In this way, after configuring the required feature descriptions and device control panel on the platform side, the product undergoes upgrade by implementing the feature updating scheme proposed by the present application. This enables the software of terminals within the same IoT product to be updated, and allows users to immediately experience the updated features through the terminal application, providing a better user experience. Moreover, because the feature updating scheme of the present application makes the product upgrading process very convenient, the platform side can add, modify and delete the features of the products that have been mass-produced and released, and differential distribution control of features can be achieved by configuring different product versions. Furthermore, by implementing the feature updating scheme provided by the present application, different hardware devices within the same product can access different features based on their specific usage environments (such as APP versions or firmware versions).

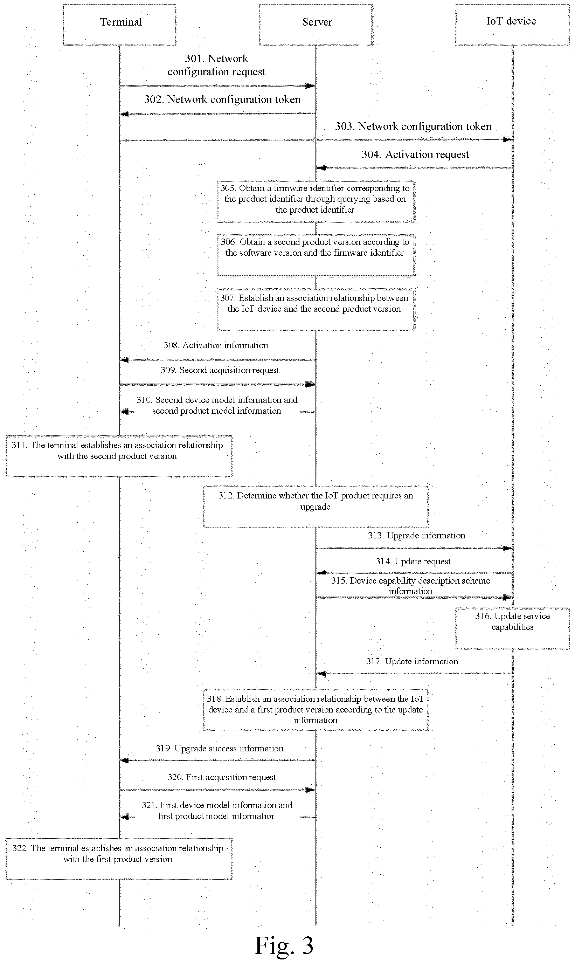

The feature updating method provided by the embodiments of the present application will be described in detail below. Referring to Fig. 3, the feature updating method according to another embodiment of the present application comprises the following steps.

In 301, a server receives a network configuration request sent by a terminal.

After an IoT device enters a network configuration mode, the server receives the network configuration request sent by the terminal. The network configuration request is used to establish a network connection between the IoT device and the server.

In 302, the server sends a network configuration token to the terminal according to the network configuration request.

The server sends the network configuration token to the terminal according to the network configuration request. Here, the network configuration token is an encrypted string with user information.

In 303, the terminal sends the network configuration token to the IoT device.

The terminal sends the network configuration token to the IoT device. The network configuration token is a prerequisite for the activation of the IoT device. Only after receiving the network configuration token can subsequent activation operations be performed.

In 304, the server receives an activation request sent by the IoT device.

The server receives the activation request sent by the IoT device. Here, the activation request is information obtained by the IoT device according to the network configuration token, and the activation request comprises a product identifier of the IoT device and a software version of the IoT device. The product identifier is a unique identifier of an IoT product corresponding to the IoT device.

In 305, the server obtains a firmware identifier corresponding to the product identifier through querying based on the product identifier.

The server obtains the firmware identifier corresponding to the product identifier through querying based on the product identifier. The firmware identifier is a unique hardware identifier of the IoT device.

In 306, the server obtains a second product version according to the software version and the firmware identifier.

The server obtains the second product version according to the software version and the firmware identifier. Specifically, the server queries a database according to the software version and the firmware identifier to obtain the second product version. Here, the second product version is the original product version before the update scenario.

In 307, the server establishes an association relationship between the IoT device and the second product version.

The server establishes an association relationship between the IoT device and the second product version. An association relationship is established between the IoT device and the second product version, with configuration focusing on device capability description scheme, panel, multilanguage, and shortcut control, so as to realize the association between them.

In 308, the server sends activation information to the terminal.

After obtaining the activation information according to the activation request, the server sends the activation information to the terminal. The activation information is used to indicate that the IoT device has been associated with the second product version.

In 309, the terminal sends a second acquisition request to the server according to the activation information.

The terminal sends the second acquisition request to the server according to the activation information. The application software of the terminal needs to send the second acquisition request to the server in order to obtain the required data.

In 310, the server sends second device model information and second product model information to the terminal according to the second acquisition request.

The server sends the second device model information and the second product model information to the terminal according to the second acquisition request. Specifically, the server first sends the second device model information to the terminal according to the second acquisition request, and then the terminal sends a request again to make the server send the second product model information.

In 311, the terminal establishes an association relationship with the second product version.

The terminal establishes an association relationship with the second product version. An association relationship is established between the terminal and the second product version, with configuration focusing on device capability description scheme, panel, multilanguage, and shortcut control, so as to realize the association between them.

In 312, the server determines whether the IoT product needs upgrade; if so, proceed to 313; and if not, skip the step.

The server determines whether the IoT product needs upgrade, which can be performed through active detection by the IoT device or proactive checks initiated by the server.

Specifically, the server can determine whether there is a need for upgrade according to detection information sent by the IoT device. The detection information comprises the product identifier of the IoT product. If there is a need for upgrade, the server sends upgrade information to the IoT device. The trigger of upgrade supports the active power-on detection of the IoT device. After the IoT device is powered on, the detection will be started, that is, the detection information will be sent, and the server will determine whether upgrade can be carried out. If there is a need for upgrade, the upgrade information will be sent, and then subsequent update operations will be carried out.

Specifically, the server can also determine whether the firmware version of the IoT device matches the software version of the terminal under the first product version, and if so, the server sends the upgrade information to the IoT device. The server can be configured to issue the upgrade information according to preset rules, that is, to determine whether the firmware version of the IoT device matches or is compatible with the software version of the terminal under the latest product version, and issue the upgrade information to the IoT device if the conditions are met.

In 313, the server sends the upgrade information to the IoT device.

The server sends the upgrade information to the IoT device. The server, also known as the cloud, can be pre-configured and send the upgrade information to the IoT device after meeting the conditions. Here, the IoT device may be a device with communication modules, such as smart lights, smart TVs and smart fans.

In 314, the server receives an update request of the IoT device.

After the IoT device obtains the update request according to the upgrade information, the server receives the update request sent by the IoT device. The update request is used to request the relevant information needed for updating, in order for the IoT device to update service capabilities accordingly.

In 315, the server sends device capability description scheme information to the IoT device according to the update request.

The server sends the device capability description scheme information to the IoT device according to the update request. The server obtains the device capability description scheme information according to the update request, and then sends the device capability description scheme information to the IoT device. Here, the device capability description schema information refers to schema information, which can be simply understood as a rule to present device features in data.

In 316, the IoT device updates service capabilities.

The loT device updates the service capabilities. The loT device updates the service capabilities according to the obtained schema information to obtain update information.

In 317, the server receives update information sent by the IoT device.

After the IoT device updates the service capabilities to obtain the update information, the server receives the update information sent by the IoT device. The reception of the update information indicates that the IoT device has completed the update of the service capabilities, so that the following steps can be performed.

In 318, the server establishes an association relationship between the IoT device and a first product version according to the update information.

The server establishes an association relationship between the IoT device and the first product version according to the update information. Here, the first product version is a target version of an IoT product corresponding to the IoT device, and the target version is the latest version in the update scenario. Specifically, the data of the IoT device are initialized according to the latest device capability description scheme information, and an association relationship is established between the IoT device and the first product version.

In 319, the server sends upgrade success information to the terminal.

The server sends the upgrade success information to the terminal. The upgrade success information indicates that the IoT device has been updated, and the terminal can carry out subsequent operations.

In 320, the terminal sends a first acquisition request to the server according to the upgrade success information.

The terminal sends the first acquisition request to the server according to the upgrade success information. The application software of the terminal needs to send the first acquisition request to the server in order to obtain the data needed for software updates.

In 321, the server sends first device model information and first product model information to the terminal according to the first acquisition request.

The terminal receives the first device model information and the first product model information sent by the server. Specifically, the terminal first receives the first device model information, then sends a request, and then receives the first product model information sent by the server. The first device model information comprises basic information of the IoT device and business data of the IoT device, the basic information of the IoT device includes IoT device identifier, IoT device name, IoT device icon and online status, and the business data of the IoT device include feature name, latest status of feature and update time of feature status. The first product model information comprises basic information of the IoT product and the service capabilities of the IoT device. The basic information of the IoT product includes manufacturer identifier, manufacturer name, device type and protocol type. The service capabilities of the IoT device are used to describe the functionality of the IoT device. Here, the functionality is made up of several service capabilities, and each service capability has its corresponding attributes, commands, and command parameters.

In 322, the terminal establishes an association relationship with a first product version according to the first device model information and the first product model information.

The terminal establishes an association relationship with the first product version according to the first device model information and the first product model information. Here, the first product version is a target version of an IoT product corresponding to the IoT device, and the target version is the latest version in the update scenario. An association relationship is established between the terminal and the first product version, with configuration focusing on device capability description scheme, panel, multilanguage, and shortcut control. Here, the data between different product versions can be isolated in four aspects: schema configuration, panel configuration, multilanguage configuration and shortcut control configuration.

In this embodiment, after pulling the network configuration token information from the server, the terminal sends the network configuration token information to the IoT device, and the IoT device sends the activation request to the server to establish an association relationship between the IoT device and the second product version. The application software of the terminal receives the second device model information and the second product model information to establish an association relationship between the application software of the terminal and the second product version. At this point, the activation process of the IoT device has been completed, and device activation is a prerequisite for the feature update of the device. Then, an association relationship between the IoT device and the first product version is established, and an association relationship between the application software of the terminal and the first product version is established. The data between two product versions can be isolated in four aspects: schema configuration, panel configuration, multilanguage configuration and shortcut control configuration, not affecting the development and testing. This ensures that the IoT devices under the same IoT product have been updated, and the terminal also has been updated, thereby achieving an overall feature update of the IoT product. The pre-update product is retained without affecting the use of the new product version. This allows users to immediately experience the updated features, providing a better user experience.

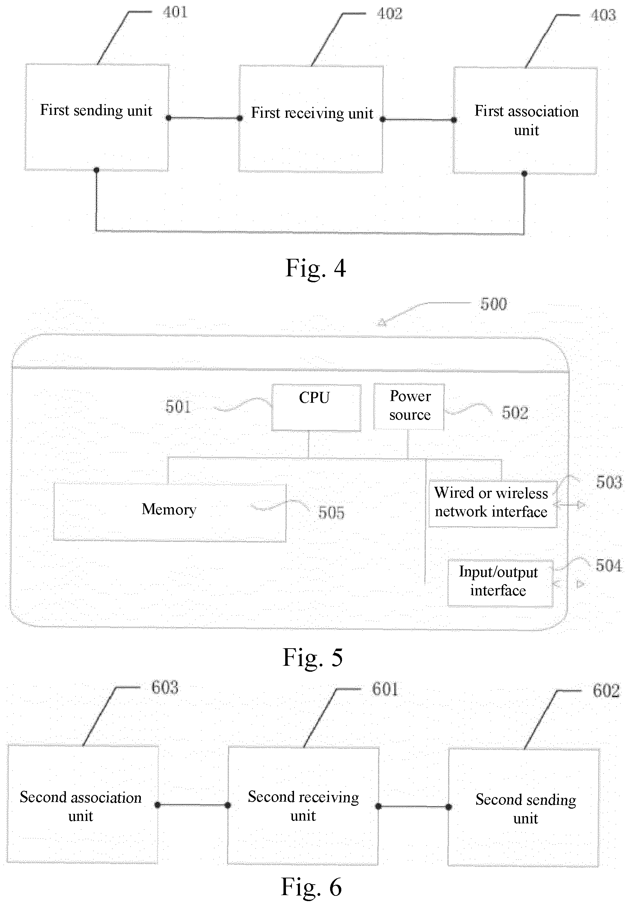

The server and terminal in the embodiments of the present application will be described below. Referring to Fig. 4, according to an embodiment of the present application, the server comprises:
a first sending unit 401 configured to send upgrade information to an IoT device according to preset conditions;
a first receiving unit 402 configured to receive an update request of the IoT device, the update request being information obtained by the IoT device according to the upgrade information;
the first sending unit 401 being further configured to send device capability description scheme information to the IoT device, in order for the IoT device to update service capabilities;
the first receiving unit 402 being further configured to receive update information sent by the IoT device, the update information being information obtained by the IoT device from updating the service capabilities;
a first association unit 403 configured to establish an association relationship between the IoT device and a first product version according to the update information, the first product version being a target version of an IoT product corresponding to the IoT device;
the first sending unit 401 being further configured to send upgrade success information to a terminal, in order for the terminal to send a first acquisition request to the server, the first acquisition request being information obtained by the terminal according to the upgrade success information; and
the first sending unit 401 being further configured to send first device model information and first product model information to the terminal according to the first acquisition request, in order for the terminal to establish an association relationship with the first product version, the first device model information comprising basic information of the IoT device and business data of the IoT device, and the first product model information comprising basic information of the IoT product and the service capabilities of the IoT product.

In the embodiments of the present application, after the first sending unit 401 sends the upgrade information to the IoT device according to the preset conditions, the first receiving unit 402 receives the update request of the IoT device, and then the first sending unit 401 sends the device capability description scheme information to the IoT device according to the update request. The first receiving unit 402 receives the update information sent by the IoT device, and then the first association unit 403 establishes an association relationship between the IoT device and the first product version according to the update information. The first sending unit 401 sends the upgrade success information to the terminal, and then sends the first device model information and the first product model information to the terminal according to the first acquisition request, so that the terminal can establish an association relationship with the first product version. In this way, after configuring the required feature descriptions and device control panel on the platform side, the product undergoes upgrade by implementing the feature updating scheme proposed by the present application. This ensures that the IoT devices under the same IoT product have been updated, and the terminal also has been updated, thereby achieving an overall feature update of the IoT product. This allows users to immediately experience the updated features through the terminal application, providing a better user experience. Moreover, because the feature updating scheme of the present application makes the product upgrading process very convenient, the platform side can add, modify and delete the features of the products that have been mass-produced and released, and differential distribution control of features can be achieved by configuring different product versions. Furthermore, by implementing the feature updating scheme provided by the present application, different hardware devices within the same product can access different features based on their specific usage environments (such as APP versions or firmware versions).

The functions and processes executed by each unit in the server in this embodiment are similar to those executed by the server in Figs. 1-3, and will not be repeated here.

Fig. 5 is a structural diagram of a server according to an embodiment of the present application. The server 500 may comprise one or more central processing units (CPU) 501 and a memory 505, and one or more applications or data are stored in the memory 505.

The memory 505 may be a volatile memory or persistent memory. A program stored in the memory 505 may comprise one or more modules, and each module may comprise a series of instruction operations on the server. Further, the CPU 501 may be configured to communicate with the memory 505, and execute a series of instruction operations in the memory 505 on the server 500.

The server 500 may also comprise one or more power sources 502, one or more wired or wireless network interfaces 503, one or more input/output interfaces 504, and/or one or more operating systems, such as Windows ServerTM, Mac OS XTM, UnixTM, LinuxTM, FreeBSDTM, etc.

The CPU 501 can perform the operations performed by the server in the embodiments shown in Figs. 1-3, and the details are not repeated here.

Referring to Fig. 6, according to an embodiment of the present application, the terminal comprises:
a second receiving unit 601 configured to receive upgrade success information sent by a server;
a second sending unit 602 configured to send a first acquisition request to the server according to the upgrade success information;
the second receiving unit 601 being further configured to receive first device model information and first product model information sent by the server, the first device model information and the first product model information being information obtained by the server according to the first acquisition request; and
a second association unit 603 configured to establish an association relationship with a first product version according to the first device model information and the first product model information.
In this embodiment, after the second receiving unit 601 receives the upgrade success information, the second sending unit 602 sends the first acquisition request to the server, then the first device model information and the first product model information are received, and finally an association relationship with the first product version is established through the second association unit 603. In this way, after configuring the required feature descriptions and device control panel on the platform side, the product undergoes upgrade by implementing the feature updating scheme proposed by the present application. This enables the software of terminals within the same IoT product to be updated, and allows users to immediately experience the updated features through the terminal application, providing a better user experience. Moreover, because the feature updating scheme of the present application makes the product upgrading process very convenient, the platform side can add, modify and delete the features of the products that have been mass-produced and released, and differential distribution control of features can be achieved by configuring different product versions. Furthermore, by implementing the feature updating scheme provided by the present application, different hardware devices within the same product can access different features based on their specific usage environments (such as APP versions or firmware versions).

The functions and processes executed by each unit in the terminal in this embodiment are similar to those executed by the terminal in Figs. 1-3, and will not be repeated here.

In some embodiments, the terminal may be a mobile phone, a tablet computer, a desktop, a laptop, a notebook computer, an ultra-mobile personal computer (UMPC), a handheld computer, a netbook, a personal digital assistant (PDA), a wearable terminal, a smart watch and other devices, and the embodiments of the present application do not impose special restrictions on the specific form of the terminal.

## Claims

1. A feature updating method, comprising:
sending, by a server, upgrade information to an Internet of things (IoT) device;
receiving, by the server, an update request of the IoT device, wherein the update request is information obtained by the IoT device according to the upgrade information;
sending, by the server, device capability description scheme information to the IoT device according to the update request, in order for the IoT device to update service capabilities;
receiving, by the server, update information sent by the IoT device, wherein the update information is information obtained by the IoT device from updating the service capabilities;
establishing, by the server, an association relationship between the IoT device and a first product version according to the update information, wherein the first product version is a target version of an IoT product corresponding to the IoT device;
sending, by the server, upgrade success information to a terminal, in order for the terminal to send a first acquisition request to the server, wherein the first acquisition request is information obtained by the terminal according to the upgrade success information; and
sending, by the server, first device model information and first product model information to the terminal according to the first acquisition request, in order for the terminal to establish an association relationship with the first product version, wherein the first device model information comprises basic information of the IoT device and business data of the IoT device, and the first product model information comprises basic information of the IoT product and the service capabilities of the IoT device.

2. The feature updating method according to claim 1, before sending, by a server, update information to an IoT device according to preset conditions, further comprising:
receiving, by the server, a network configuration request sent by the terminal;
sending, by the server, a network configuration token to the terminal according to the network configuration request, in order for the terminal to send the network configuration token to the IoT device;
receiving, by the server, an activation request sent by the IoT device, wherein the activation request is information obtained by the IoT device according to the network configuration token, and the activation request comprises a product identifier of the IoT device and a software version of the IoT device;
obtaining, by the server, a firmware identifier corresponding to the product identifier through querying based on the product identifier;
obtaining, by the server, a second product version according to the software version and the firmware identifier;
establishing, by the server, an association relationship between the IoT device and the second product version;
sending, by the server, activation information to the terminal, in order for the terminal to send a second acquisition request to the server, wherein the activation information is obtained by the server according to the activation request; and
sending, by the server, second device model information and second product model information to the terminal according to the second acquisition request, in order for the terminal to establish an association relationship with the second product version.

3. The feature updating method according to claim 1, before sending, by a server, upgrade information to an IoT device, further comprising:
determining, by the server, whether the IoT product needs upgrade; and
if so, sending, by the server, the upgrade information to the IoT device.

4. The feature updating method according to claim 3, wherein determining, by the server, whether the IoT product needs upgrade comprises:
acquiring, by the server, detection information sent by the IoT device, wherein the detection information comprises a product identifier of the IoT product; and
determining, by the server, whether there is a need for upgrade according to the detection information sent by the IoT device.

5. The feature updating method according to claim 3, wherein determining, by the server, whether the IoT product needs upgrade comprises:
acquiring, by the server, a firmware version of the IoT device and a software version of the terminal under the first product version; and
determining, by the server, whether there is a need for upgrade according to a matching status of the firmware version of the IoT device and the software version.

6. A feature updating method, comprising:
receiving, by a terminal, upgrade success information sent by a server;
sending, by the terminal, a first acquisition request to the server according to the upgrade success information;
receiving, by the terminal, first device model information and first product model information sent by the server, wherein the first device model information and the first product model information are information obtained by the server according to the first acquisition request; and
establishing, by the terminal, an association relationship with a first product version according to the first device model information and the first product model information.

7. The feature updating method according to claim 6, before receiving, by a terminal, upgrade success information sent by a server, further comprising:
sending, by the terminal, a network configuration request to the server;
receiving, by the terminal, a network configuration token sent by the server, wherein the network configuration token is information obtained by the server according to the network configuration request;
receiving, by the terminal, activation information sent by the server, wherein the activation information is obtained by the server according to the activation request;
sending, by the terminal, a second acquisition request to the server according to the activation information;
receiving, by the terminal, second device model information and second product model information sent by the server, wherein the second device model information and the second product model information are information obtained by the server according to the second acquisition request; and
establishing, by the terminal, an association relationship with a second product version according to the second device model information and the second product model information.

8. A server, comprising:
a first sending unit, configured to send upgrade information to an IoT device;
a first receiving unit, configured to receive an update request of the IoT device, wherein the update request being information is obtained by the IoT device according to the upgrade information;
the first sending unit being further configured to send device capability description scheme information to the IoT device, in order for the IoT device to update service capabilities;
the first receiving unit being further configured to receive update information sent by the IoT device, wherein the update information is information obtained by the IoT device from updating the service capabilities;
a first association unit, configured to establish an association relationship between the IoT device and a first product version according to the update information, wherein the first product version is a target version of an IoT product corresponding to the IoT device;
the first sending unit being further configured to send upgrade success information to a terminal, in order for the terminal to send a first acquisition request to the server, wherein the first acquisition request is information obtained by the terminal according to the upgrade success information; and
the first sending unit being further configured to send first device model information and first product model information to the terminal according to the first acquisition request, in order for the terminal to establish an association relationship with the first product version, wherein the first device model information comprises basic information of the IoT device and business data of the IoT device, and the first product model information comprises basic information of the IoT product and the service capabilities of the IoT product.

9. A terminal, comprising:
a second receiving unit, configured to receive upgrade success information sent by a server;
a second sending unit, configured to send a first acquisition request to the server according to the upgrade success information;
the second receiving unit being further configured to receive first device model information and first product model information sent by the server, wherein the first device model information and the first product model information are information obtained by the server according to the first acquisition request; and
a second association unit, configured to establish an association relationship with a first product version according to the first device model information and the first product model information.

10. A computer-readable storage medium, comprising instructions which, when running on a computer, cause the computer to implement the method according to any one of claims 1-7.
